# EUROPÄISCHE PATENTSCHRIFT

(11) **EP 4 330 117 B1**
(45) Veröffentlichungstag und Bekanntmachung des Hinweises auf die Patenterteilung: **30.07.2025**
(21) Anmeldenummer: 22709684.9
(22) Anmeldetag: 01.03.2022
(51) Int. Cl.: B62J 7/08

(54) **NEIGEFAHRZEUG MIT GEPÄCKBEFESTIGUNGSVORRICHTUNG**
TILTING VEHICLE WITH A LUGGAGE FASTENING DEVICE
VÉHICULE INCLINABLE DOTÉ D'UN DISPOSITIF DE FIXATION DE BAGAGES

(30) Priorität: 26.04.2021 DE 102021110543
(43) Veröffentlichungstag der Anmeldung: 06.03.2024
(73) Patentinhaber: Bayerische Motoren Werke Aktiengesellschaft, 80788 München (DE)
(72) Erfinder: MAYER, Jean-Thomas, 81669 München (DE)
(86) Internationale Anmeldenummer: PCT/EP2022/055028
(87) Internationale Veröffentlichungsnummer: WO 2022/228750

(56) Entgegenhaltungen:
- CH-A- 234 492
- DE-A1- 102007 045 514

## Beschreibung

Die Erfindung betrifft ein Neigefahrzeug mit einer Gepäckbefestigungs-vorrichtung zum Befestigen eines Gepäckstücks an dem Neigefahrzeug.

Bei Neigefahrzeugen, wie beispielsweise Motorrädern oder Motorrollern, ist ein Stauraum häufig sehr begrenzt. Sollen Gepäckstücke mitgeführt werden, so können diese beispielsweise in Seitenkoffern oder Top Cases verstaut werden, sofern diese in der jeweiligen Situation verfügbar sind und ein ausreichendes Fassungsvermögen aufweisen.

Alternativ werden insbesondere größere und/oder flexible Gepäckstücke häufig mittels Spanngurten oder Seilen am Fahrzeug befestigt. Hierbei müssen jedoch geeignete Befestigungspunkte am Fahrzeug gefunden werden, um ein sicheres Verzurren zu ermöglichen.

Zudem müssen in einem nicht genutzten Zustand die Spanngurte oder Seile im Fahrzeug sicher verstaut werden, um sie im Bedarfsfall verfügbar zu halten. Da es sich stets um separates Zubehör handelt, können die Spanngurte oder Seile leicht verloren gehen.

Die CH 234 492 A betrifft eine Befestigungsvorrichtung, welche eine in einem Gehäuse angeordnete, mit einem bandförmigen Befestigungsorgan versehene Winde aufweist, wobei die mittels Handhebel drehbare Winde mit einem Rastenrad versehen ist, in dessen Rasten ein unter Federwirkung stehender schwenkbarer Sperriegel eingreift, der mittels eines axial in die Windennabe einschiebbaren Schlüssels aus den Rasten gehoben werden kann. DE102007045514 offenbart die Merkmale des Oberbegriffes des Anspruchs 1.

Eine Aufgabe der Erfindung ist es eine Befestigungsvorrichtung für ein Gepäckstück an einem Neigefahrzeug vorzusehen, um zumindest einen der genannten Nachteile zu reduzieren oder zu vermeiden.

Die Aufgabe wird gelöst durch ein Motorrad oder Motorroller oder Schneemobil mit einer Gepäckbefestigungsvorrichtung gemäß dem Gegenstand des Patentanspruchs 1. Vorteilhafte Ausführungsformen ergeben sich aus den hiervon abhängigen Patentansprüchen.

Demnach wird ein Neigefahrzeug mit einer Gepäckbefestigungsvorrichtung zum Befestigen eines Gepäckstücks an dem Neigefahrzeug bereitgestellt, wobei die Gepäckbefestigungsvorrichtung mindestens ein Spannelement umfasst, welches in einer Betriebsposition zum zumindest abschnittsweisen Umgreifen des Gepäckstücks ausgebildet ist, und das mindestens eine Spannelement mit einem ersten Ende mit einer Verstauvorrichtung verbunden ist und ein freies zweites Ende aufweist, welches zum lösbaren Verbinden mit einem Halteabschnitt des Neigefahrzeugs ausgebildet ist. Außerdem ist die Verstauvorrichtung zur wahlweisen Aufnahme und Entnahme zumindest eines Abschnitts des mindestens einen Spannelements ausgebildet.

Als Neigefahrzeug im Sinne dieser Beschreibung werden insbesondere Motorräder, aber auch Motorroller, beispielsweise zwei-, drei, oder vierrädrige Motorroller beziehungsweise Scooter, sowie Trikes oder Quads verstanden. Grundsätzlich ist ein Einsatz aber auch in anderen Kraftfahrzeugen mit entsprechender Sitzanordnung, wie zum Beispiel in Schneemobilen, möglich.

Das Neigefahrzeug weist also die Gepäckbefestigungsvorrichtung auf, mit der es möglich ist, Gepäckstücke am Fahrzeug zu befestigen. Hierzu weist diese das eine oder die mehreren Spannelemente auf. Diese sind mit jeweils einem ersten Ende mit der Verstauvorrichtung verbunden und können zur Befestigung des Gepäcks auch an dem zweiten Ende am Fahrzeug befestigt werden. Das jeweilige Spannelement kann hierbei über das Gepäckstück gelegt sein und dieses mit einem zwischen dem ersten Ende und dem zweiten Ende angeordneten Abschnitt beaufschlagen und somit gegen das Fahrzeug spannen, um dieses in der gewünschten Position zu halten.

Das mindestens eine Spannelement ist - wie beschrieben - einseitig mit dem ersten Ende mit der Verstauvorrichtung verbunden. Die Verbindung kann beispielsweise derart ausgestaltet sein, dass diese eine feste und dauerhafte Verbindung bildet. Die Verbindung des ersten Endes mit der Verstauvorrichtung bieten bereits den Vorteil, dass das jeweilige Spannelement im nicht genutzten Zustand nicht mehr verloren gehen kann.

Um das jeweilige Spannelement insbesondere in dem nicht genutzten Zustand in der Verstauposition zu verstauen und für einen späteren Einsatz aufzubewahren, kann die Verstauvorrichtung das jeweilige Spannelement ganz oder lediglich abschnittsweise aufnehmen. Soll das Spannelement zum Einsatz kommen, so kann das jeweilige Spannelement zumindest abschnittsweise der Verstauvorrichtung wieder entnommen werden.

Gemäß einer Ausführungsform der Verstauvorrichtung kann das mindestens eine Spannelement aus der Verstauvorrichtung ausziehbar entnehmbar sein, um das mindestens eine Spannelement von der Verstauposition in die Betriebsposition zu bringen. Dies bedeutet, dass das mindestens eine Spannelement im Bedarfsfall leicht bereitgestellt werden kann, indem dieses aus der Verstauvorrichtung herausgezogen wird.

Vorzugsweise ist das mindestens eine Spannelement als Gurt oder Seil ausgebildet.

Zusätzlich kann das mindestens eine Spannelement an dem zweiten Ende ein Befestigungselement, insbesondere ein hakenförmiges Befestigungselement, aufweisen, welches zum lösbaren Verbinden mit dem Halteabschnitt ausgebildet ist. Der Halteabschnitt kann beispielsweise eine Öse oder eine Ausnehmung aufweisen, in die das hakenförmige Befestigungselement eingreifen kann. Lediglich beispielsweise kann das hakenförmige Befestigungselement selbstsichernd, beispielsweise als sogenannter Karabiner-Haken, ausgeführt sein.

Des Weiteren kann die Verstauvorrichtung zum wahlweisen Aufrollen oder Abrollen des mindestens einen Spannelements ausgebildet sein. Dies bietet die Möglichkeit das jeweilige Spannelement leicht und platzsparend zu verstauen. Hierzu kann die Verstauvorrichtung ein Aufrollmittel umfassen. Dieses kann zum Beispiel als eine drehbare Rolle oder Trommel ausgebildet sein, auf deren äußerer Mantelfläche das Spannelement aufgerollt beziehungsweise von deren äußerer Mantelfläche das Spannelement abgerollt werden kann.

Gemäß einer Ausführungsform kann das Aufrollmittel zum automatischen Aufrollen des mindestens einen Spannelements ausgebildet sein. Zum Beispiel kann das Aufrollmittel zusätzlich eine Rückstellvorrichtung aufweisen, welche das Aufrollmittel im Bedarfsfall betätigt, um das mindestens eine Spannelement automatisch aufzurollen.

Ist das Aufrollmittel beispielhaft als Rolle oder Trommel ausgebildet, so kann das Aufrollmittel eine als Federelement ausgebildete Rückstellvorrichtung umfassen. Das Aufrollmittel kann derart ausgebildet sein, dass das Aufrollmittel beziehungsweise die Rückstellvorrichtung bereits beim Abrollen des Spannelements unter Vorspannung gesetzt wird, vorzugsweise aufgrund der Abrollbewegung. Anschließend kann die Rückstellvorrichtung aufgrund der Vorspannung das Aufrollmittel in entgegengesetzter Bewegung das automatische Aufrollen bewirken.

Alternativ zu einer mechanischen Erzeugung der Vorspannung mittels eines Federelements, kann das Aufrollmittel beispielsweise einen Antrieb, insbesondere einen elektromotorischen Antrieb, aufweisen, der das Aufrollmittel bei Bedarf zum Aufrollen des mindestens einen Spannelements in eine entsprechende Bewegung versetzt.

Des Weiteren kann die Verstauvorrichtung ein Arretierungsmittel aufweisen, welches dazu ausgebildet ist, das mindestens eine Spannelement in einem teilweise oder vollständig abgerollten Zustand bezüglich der Verstauvorrichtung zu arretieren. Das Arretierungsmittel kann beispielsweise eine selbsthemmende Sperrvorrichtung sein, die im gehemmten Zustand ein weiteres Abrollen des Spannelements verhindert. Dies bedeutet, dass eine nachträgliche Fortsetzung des Abrollens des Spannelements vermieden wird, um eine Befestigung beziehungsweise die Verspannung des Gepäckstücks nicht unabsichtlich zu lösen. Das Arretierungsmittel kann beispielsweise ein mechanisches Sperrelement umfassen.

Die Verstauvorrichtung ist unterhalb eines Sitzes angeordnet.

Dies bietet die Möglichkeit die Verstauvorrichtung im Neigefahrzeug unauffällig und Bauraum optimiert zu positionieren. Diese Positionierung ermöglicht es, das mindestens eine Spannelement unterhalb des Sitzes aus der Verstauvorrichtung im Bedarfsfall herauszuziehen und ein zu befestigendes Gepäckstück auf dem Sitz zu positionieren und dort zu sichern.

Zum Beispiel kann mindestens eine Öffnung der Verstauvorrichtung, welche für die wahlweise Aufnahme und Entnahme des mindestens einen Spannelements vorgesehen ist, einem ersten Ende des Sitzes zugeordnet sein und der Halteabschnitt einem zweiten Ende des Sitzes zugeordnet sein. Hierbei können das erste Ende und das zweite Ende entgegengesetzt zueinander an dem Sitz vorgesehen sein. Vorzugsweise ist der Sitz ein Soziussitz oder ein hinterer Sitzabschnitt einer Sitzbank. Zum Beispiel bildet das erste Ende ein in einer Längsrichtung des Sitzes (im verbauten Zustand entspricht diese Längsrichtung einer Fahrzeuglängsrichtung des Fahrzeugs) das vordere Ende des Sitzes. Entsprechend bildet das hierzu entgegengesetzte zweite Ende das hintere Ende des Sitzes.

Selbstverständlich ist ebenso eine umgekehrte Anordnung möglich, wonach das hindere Ende des Sitzes das erste Ende, und das vordere Ende das zweite Ende bildet.

Alternativ ist aber auch eine Ausrichtung in einer Fahrzeugquerrichtung möglich. In diesem Fall ist das erste Ende durch einen seitlichen, linken Rand des Sitzes und das zweite Ende durch einen seitlichen, rechten Rand des Sitzes gebildet. Ebenso ist eine umgekehrte Ausrichtung möglich, bei der das erste Ende durch einen seitlichen, rechten Rand des Sitzes und das zweite Ende durch einen seitlichen, linken Rand des Sitzes gebildet wird.

In jedem dieser Fälle ermöglicht diese Anordnung, dass das Gepäckstück leicht auf dem Sitz positioniert und dort befestigt werden kann, indem das mindestens eine Spannelement über das Gepäckstück gespannt und mit dem Halteabschnitt lösbar verbunden werden kann.

Alternativ zu einer Anordnung der Verstauvorrichtung unterhalb eines Sitzes ist aber auch eine Anordnung an einer Fahrzeugseite oder im Bereich eines Fahrzeugtanks oder im Bereich eines Vorderrades oder an einer anderen geeigneten Stelle des Neigefahrzeugs möglich, um an diesen Stellen das Gepäckstück mittels einer dort angeordneten Gepäckbefestigungsvorrichtung gemäß dieser Beschreibung zu befestigen.

Die Erfindung wird nachfolgend anhand eines Ausführungsbeispiels unter Bezugnahme auf die Zeichnungen näher erläutert. Es zeigen:
- Fig. 1:: eine perspektivische Ansicht eines hinteren Fahrzeugteils eines Neigefahrzeug mit einer Gepäckbefestigungsvorrichtung gemäß der Beschreibung,
- Fig. 2:: eine perspektivische Ansicht der Gepäckbefestigungs-vorrichtung gemäß Fig. 1, und
- Fig. 3:: eine perspektivische Ansicht des hinteren Fahrzeugteils gemäß Fig. 1 in beladenem Zustand.

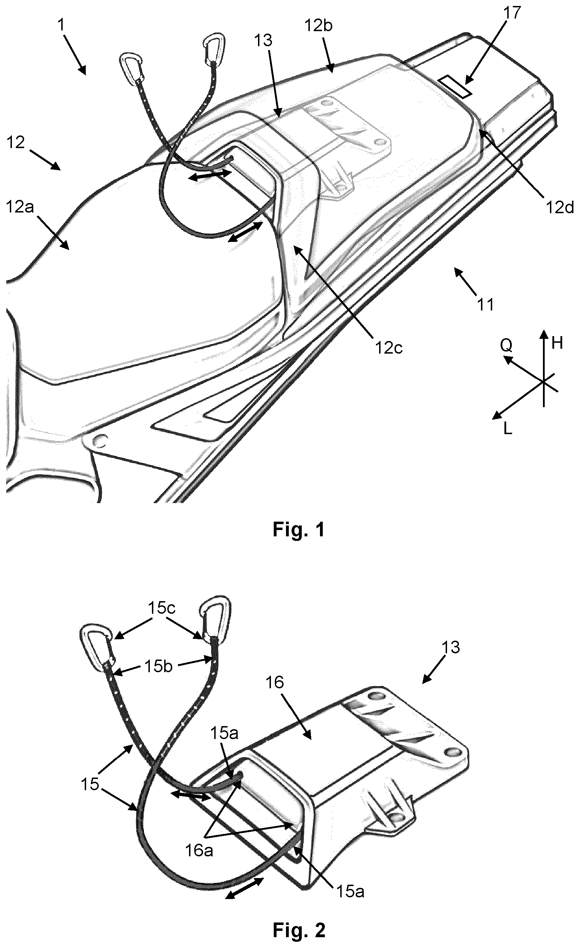

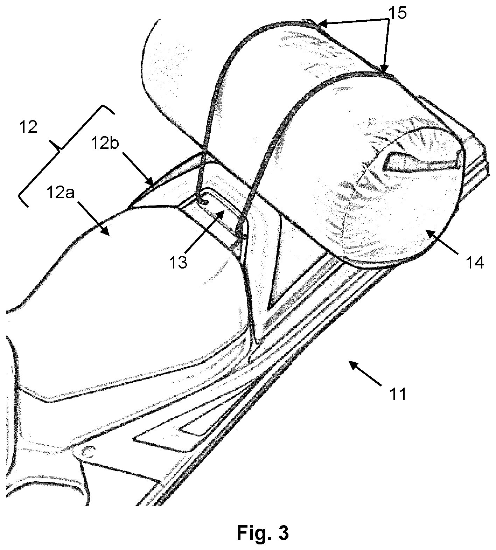

Fig. 1 zeigt in perspektivischer Ansicht ein hinteres Fahrzeugteil 11 eines Neigefahrzeug 1 mit einer zweiteiligen Sitzbank 12. Diese umfasst einen Fahrersitz 12a sowie einen Soziussitz 12b. Des Weiteren ist eine Gepäckbefestigungsvorrichtung 13 vorgesehen, die zum Befestigen eines Gepäckstücks 14 an dem Neigefahrzeug 1 ausgebildet ist. Ein beladener Zustand mit dem auf dem Soziussitz 12b angeordneten Gepäckstück 14 ist in Fig. 3 dargestellt. Fig. 2 zeigt eine Detailansicht der entsprechenden Gepäckbefestigungsvorrichtung 13.

Gemäß der Darstellung in den Fig. 1 bis 3 umfasst die Gepäckbefestigungsvorrichtung 13 zwei Spannelemente 15. Diese sind in der in Fig. 3 dargestellten Betriebsposition über das Gepäckstück 14 gelegt und umgreifen dieses abschnittsweise. Das Gepäckstück 14 wird mit Hilfe der Spannelemente 15 gegen das Fahrzeug 1 beziehungsweise gegen den Soziussitz 12b gespannt und somit dort in der gewünschten Position gehalten.

Hierzu sind die beiden Spannelemente 15 mit jeweils einem ersten Ende 15a mit einer Verstauvorrichtung 16 verbunden. Die Verbindung des ersten Endes 15a ist als feste und dauerhafte Verbindung ausgebildet, so dass das jeweilige Spannelement 15 im nicht genutzten Zustand nicht mehr verloren gehen kann. Ein jeweils dem ersten Ende 15a entgegengesetzt angeordnetes freies zweites Ende 15b des jeweiligen Spannelements 15 ist zum lösbaren Verbinden mit einem Halteabschnitt 17 des Neigefahrzeugs 1 ausgebildet.

Zudem ist die Verstauvorrichtung 16 zur wahlweisen Aufnahme und Entnahme zumindest eines Abschnitts des jeweiligen Spannelements 15 ausgebildet. Somit kann das jeweilige Spannelement 15 insbesondere in dem nicht genutzten Zustand in der Verstauposition verstaut und für einen späteren Einsatz aufbewahrt werden. Sollen die Spannelemente 15 zum Einsatz kommen, so kann das jeweilige Spannelement 15 zumindest abschnittsweise der Verstauvorrichtung 16 wieder entnommen werden. Hierzu sind die beiden Spannelemente 15 jeweils aus der Verstauvorrichtung 16 ausziehbar ausgebildet, um die Spannelemente 15 im Bedarfsfall von der Verstauposition in die Betriebsposition zu bringen.

Die beiden Spannelemente 15 sind jeweils beispielhaft als Seil ausgebildet. Alternativ kann das jeweilige Spannelement 15 aber auch als Gurt ausgestaltet sein.

Zur Befestigung des zweiten Endes 15b umfasst jedes der beiden Spannelemente 15 an dem zweiten Ende 15b ein Befestigungselement 15c zum lösbaren Verbinden mit dem Halteabschnitt 17. Das Befestigungselement 15c ist gemäß der dargestellten Ausführungsform als hakenförmiges Befestigungselement 15c ausgebildet. Lediglich beispielhaft ist das hakenförmige Befestigungselement 15c als sogenannter Karabiner-Haken vorgesehen, wobei selbstverständlich auch andere Formen einsetzbar sind, die ein Eingriffen in den Halteabschnitt 17 oder ein Hintergreifen des Halteabschnitts 17 zum Erzeugen einer lösbaren Verbindung ermöglichen. Der Halteabschnitt 17 kann beispielsweise eine Öse oder eine Ausnehmung aufweisen, in die das hakenförmige Befestigungselement 15c eingreifen kann.

Zusätzlich ist die Verstauvorrichtung 16 zum wahlweisen Aufrollen oder Abrollen der beiden Spannelemente 15 ausgebildet. Hierzu umfasst die Verstauvorrichtung 16 ein Aufrollmittel zum automatischen Aufrollen der Spannelemente 15. Mit dessen Hilfe können die beiden Spannelement 15 aus der Verstauvorrichtung herausgezogen werden, um das Gepäckstück 14 zu befestigen. Sollen die Spannelemente 15 verstaut werden, so können diese wieder mit Hilfe des Aufrollmittels aufgerollt und damit an der Verstauvorrichtung oder im Inneren der Verstauvorrichtung 16 verstaut werden. Im dargestellten Fall bildet die Verstauvorrichtung 16 hierzu ein entsprechendes Gehäuse zur Aufnahme der Spannelemente 15 in einem im Gehäuse gebildeten Innenraum.

Um ein weiteres Abrollen und damit ein unbeabsichtigtes Lösen der Befestigung des Gepäckstücks 14 zu vermeiden, weist die Verstauvorrichtung 16 ein Arretierungsmittel auf. Dieses ist dazu ausgebildet, das jeweilige Spannelement 15 in einem teilweise oder vollständig abgerollten Zustand an oder in der Verstauvorrichtung 16 zu arretieren. Das Arretierungsmittel kann beispielsweise eine selbsthemmende Sperrvorrichtung sein, die im gehemmten Zustand ein weiteres Abrollen des jeweiligen Spannelements 15 verhindert. Dies bedeutet, dass eine nachträgliche Fortsetzung des Abrollens des Spannelements 15 vermieden wird, um eine Befestigung des Gepäckstücks 14 nicht unabsichtlich zu lösen.

Wie aus den Fig. 1 bis 3 ersichtlich ist die Verstauvorrichtung 16 unterhalb eines Soziussitzes 12b angeordnet. Dies bietet die Möglichkeit die Verstauvorrichtung 16 im Neigefahrzeug 1 unauffällig und Bauraum optimiert zu positionieren. Diese Positionierung ermöglicht es, die beiden Spannelemente 15 im Bedarfsfall unterhalb des Soziussitzes 12b aus der Verstauvorrichtung 16 herauszuziehen und das zu befestigendes Gepäckstück 14 - wie in Fig. 3 dargestellt - auf dem Soziussitz 12b zu positionieren und dort zu sichern.

Wie in der dargestellten Ausführungsform ersichtlich, ist jeweils eine Öffnung 16a der Verstauvorrichtung 16, welche für die wahlweise Aufnahme und Entnahme jeweils eines der Spannelemente 15 vorgesehen ist, einem ersten Ende 12c und der Halteabschnitt 17 einem zweiten Ende 12d des Soziussitzes 12b zugeordnet. Hierbei sind das erste Ende 12c und das zweite Ende 12d entgegengesetzt zueinander an dem Soziussitz 12b vorgesehen. Gemäß der dargestellten Ausführungsform ist der Soziussitz 12b als separater Sitz ausgebildet. Alternativ (und daher nicht dargestellt) kann der Soziussitz 12b aber auch als hinterer Sitzabschnitt einer Sitzbank ausgebildet sein. In diesem Fall könnte die Öffnungen 16a zwischen einem vorderen Sitzabschnitt für den Fahrer und dem hinteren Sitzabschnitt für den Sozius positioniert sein.

Zum Beispiel bildet das erste Ende 12c des Soziussitzes 12b ein in einer Längsrichtung L des Soziussitzes 12b (im verbauten Zustand entspricht diese Längsrichtung einer Fahrzeuglängsrichtung des Neigefahrzeugs 1) das vordere Ende des Soziussitzes 12b. Entsprechend bildet das hierzu entgegengesetzte zweite Ende 12d das hintere Ende des Soziussitzes 12b.

Selbstverständlich ist gemäß einer nicht dargestellten Ausführungsform ebenso eine umgekehrte Ausrichtung möglich, wonach das hindere Ende des Sitzes das erste Ende, und das vordere Ende das zweite Ende bildet. Ebenso ist aber auch eine Ausrichtung in einer Fahrzeugquerrichtung Q möglich.

In jedem dieser Fälle ermöglicht diese Anordnung, dass das Gepäckstück 14 leicht (in Höhenrichtung H) auf dem Soziussitz 12b positioniert und dort befestigt werden kann, indem die beiden Spannelemente 12b über das Gepäckstück 14 gespannt und mit dem Halteabschnitt 17 lösbar verbunden werden kann.

## Patentansprüche

1. Motorrad oder Motorroller oder Schneemobil (1) mit einer Gepäckbefestigungsvorrichtung (13) zum Befestigen eines Gepäckstücks (14) an jeweils dem Motorrad oder Motorroller oder Schneemobil (1), wobei die Gepäckbefestigungsvorrichtung (13) mindestens ein Spannelement (15) umfasst, welches in einer Betriebsposition zum zumindest abschnittsweisen Umgreifen des Gepäckstücks (14) ausgebildet ist, und das mindestens eine Spannelement mit einem ersten Ende (15a) mit einer Verstauvorrichtung (16) verbunden ist, und ein freies zweites Ende (15b) aufweist, welches zum lösbaren Verbinden mit einem Halteabschnitt (17) jeweils des Motorrad oder Motorroller oder Schneemobil (1) ausgebildet ist, **dadurch gekennzeichnet, dass** die Verstauvorrichtung (16) zur wahlweisen Aufnahme und Entnahme zumindest eines Abschnitts des mindestens einen Spannelements (15) ausgebildet ist,
wobei die Verstauvorrichtung (16) unterhalb eines Sitzes (12b) angeordnet ist.

2. Motorrad oder Motorroller oder Schneemobil (1) nach Anspruch 1, wobei das mindestens eine Spannelement (15) aus der Verstauvorrichtung (16) ausziehbar ausgebildet ist, um das mindestens eine Spannelement (15) von der Verstauposition in die Betriebsposition zu bringen.

3. Motorrad oder Motorroller oder Schneemobil (1) nach Anspruch 1 oder 2, wobei das mindestens eine Spannelement (15) als Gurt oder Seil ausgebildet ist.

4. Motorrad oder Motorroller oder Schneemobil (1) nach mindestens einem der voranstehenden Ansprüche 1 bis 3, wobei das mindestens eine Spannelement (15) an dem zweiten Ende (15b) ein Befestigungselement (15c), insbesondere ein hakenförmiges Befestigungselement (15c), aufweist, welches zum lösbaren Verbinden mit dem Halteabschnitt (17) ausgebildet ist.

5. Motorrad oder Motorroller oder Schneemobil (1) nach mindestens einem der voranstehenden Ansprüche 1 bis 4, wobei die Verstauvorrichtung (16) zum wahlweisen Aufrollen oder Abrollen des mindestens einen Spannelements (15) ausgebildet ist.

6. Motorrad oder Motorroller oder Schneemobil (1) nach Anspruch 5, wobei die Verstauvorrichtung (16) ein Aufrollmittel zum automatischen Aufrollen des mindestens einen Spannelements (15) umfasst.

7. Motorrad oder Motorroller oder Schneemobil (1) nach Anspruch 5 oder 6, wobei die Verstauvorrichtung (16) ein Arretierungsmittel aufweist, welches dazu ausgebildet ist, das mindestens eine Spannelement (15) in einem teilweise oder vollständig abgerollten Zustand bezüglich der Verstauvorrichtung (16) zu arretieren.

8. Motorrad oder Motorroller oder Schneemobil (1) nach einem der vorhergehenden Ansprüche , wobei mindestens eine Öffnung (16a) der Verstauvorrichtung (16), welche für die wahlweise Aufnahme und Entnahme des mindestens einen Spannelements (15) vorgesehen ist, einem ersten Ende (12c) des Sitzes (12b) zugeordnet ist und der Halteabschnitt (17) einem zweiten Ende (12d) des Sitzes (12b) zugeordnet ist.

## Claims

1. Motorbike or motor scooter or snowmobile (1) having a luggage fastening device (13) for fastening an item of luggage (14) to the respective motorbike or motor scooter or snowmobile (1), wherein the luggage fastening device (13) comprises at least one tensioning element (15) which, in an operating position, is configured to at least partially engage around the item of luggage (14), and the at least one tensioning element is connected by a first end (15a) to a stowage device (16) and has a free second end (15b) which is configured for releasable connection to a retaining portion (17) of the respective motorbike or motor scooter or snowmobile (1), **characterized in that** the stowage device (16) is configured for the selective take-up and removal of at least one portion of the at least one tensioning element (15),
wherein the stowage device (16) is arranged below a seat (12b).

2. Motorbike or motor scooter or snowmobile (1) according to Claim 1, wherein the at least one tensioning element (15) is configured to be able to be pulled out of the stowage device (16) in order to bring the at least one tensioning element (15) from the stowage position into the operating position.

3. Motorbike or motor scooter or snowmobile (1) according to Claim 1 or 2, wherein the at least one tensioning element (15) is in the form of a strap or rope.

4. Motorbike or motor scooter or snowmobile (1) according to at least one of the preceding Claims 1 to 3, wherein the at least one tensioning element (15) comprises, at the second end (15b), a fastening element (15c), in particular a hook-shaped fastening element (15c), which is configured for releasable connection to the retaining portion (17).

5. Motorbike or motor scooter or snowmobile (1) according to at least one of the preceding Claims 1 to 4, wherein the stowage device (16) is configured for the selective winding up or unwinding of the at least one tensioning element (15).

6. Motorbike or motor scooter or snowmobile (1) according to Claim 5, wherein the stowage device (16) comprises a winding-up means for automatically winding up the at least one tensioning element (15).

7. Motorbike or motor scooter or snowmobile (1) according to Claim 5 or 6, wherein the stowage device (16) comprises an arresting means which is configured to arrest the at least one tensioning element (15) in a partially or completely unwound state with respect to the stowage device (16).

8. Motorbike or motor scooter or snowmobile (1) according to at least one of the preceding claims, wherein at least one opening (16a) of the stowage device (16), said at least one opening being provided for the selective take-up and removal of the at least one tensioning element (15), is assigned to a first end (12c) of the seat (12b) and the retaining portion (17) is assigned to a second end (12d) of the seat (12b).

## Revendications

1. Motocyclette ou scooter ou motoneige (1) avec un dispositif de fixation de bagages (13) destiné à fixer un bagage (14) sur respectivement la motocyclette ou le scooter ou la motoneige (1), le dispositif de fixation de bagages (13) comprenant au moins un élément de serrage (15) qui est réalisé pour, dans une position de fonctionnement, saisir en périphérie au moins par endroits le bagage (14) et l'au moins un élément de serrage étant relié par une première extrémité (15a) à un dispositif de rangement (16) et comportant une seconde extrémité (15b) libre, laquelle est réalisée pour être reliée de manière amovible à une section de retenue (17) respectivement de la motocyclette ou du scooter ou de la motoneige (1), caractérisé(e) en ce que le dispositif de rangement (16) est réalisé pour loger et retirer au choix au moins une section de l'au moins un élément de serrage (15),
le dispositif de rangement (16) étant disposé sous un siège (12b).

2. Motocyclette ou scooter ou motoneige (1) selon la revendication 1, l'au moins un élément de serrage (15) étant réalisé de manière à pouvoir être extrait du dispositif de rangement (16) pour amener l'au moins un élément de serrage (15) de la position de rangement dans la position de fonctionnement.

3. Motocyclette ou scooter ou motoneige (1) selon la revendication 1 ou 2, l'au moins un élément de serrage (15) étant réalisé en tant que sangle ou câble.

4. Motocyclette ou scooter ou motoneige (1) selon au moins l'une des revendications précédentes 1 à 3, l'au moins un élément de serrage (15) comportant sur la seconde extrémité (15b) un élément de fixation (15c), en particulier un élément de fixation (15c) en forme de crochet, lequel est réalisé pour être relié de manière amovible à la section de retenue (17).

5. Motocyclette ou scooter ou motoneige (1) selon au moins l'une des revendications précédentes 1 à 4, le dispositif de rangement (16) étant réalisé pour enrouler ou dérouler au choix l'au moins un élément de serrage (15).

6. Motocyclette ou scooter ou motoneige (1) selon la revendication 5, le dispositif de rangement (16) comprenant un moyen d'enroulement destiné à enrouler automatiquement l'au moins un élément de serrage (15).

7. Motocyclette ou scooter ou motoneige (1) selon la revendication 5 ou 6, le dispositif de rangement (16) comportant un moyen d'arrêt, lequel est réalisé pour arrêter l'au moins un élément de serrage (15) dans un état en partie ou totalement déroulé par rapport au dispositif de rangement (16).

8. Motocyclette ou scooter ou motoneige (1) selon l'une des revendications précédentes, au moins une ouverture (16a) du dispositif de rangement (16), laquelle est prévue pour le logement et le retrait au choix de l'au moins un élément de serrage (15), étant associée à une première extrémité (12c) du siège (12b) et la section de retenue (17) étant associée à une seconde extrémité (12d) du siège (12b).
